# EUROPEAN PATENT APPLICATION

(11) **EP 2 565 122 A1**
(43) Date of publication of application: **06.03.2013**
(21) Application number: 11729433.0
(22) Date of filing: 29.04.2011
(51) Int. Cl.: B64D 39/00, C09D 5/22

(54) **SYSTEM FOR NIGHT VISION COMPRISING A LANTHANIDE DOPED CRYSTAL CONTAINING COATING AND AN INFRARED LASER ILLUMINATION MEANS**

(30) Priority: 29.04.2010 ES 201030632
(71) Applicant: EADS Construcciones Aeronauticas, S.A., 28022 Madrid (ES)
(72) Inventor: ADARVE LOZANO, Alberto, E-28022 Madrid (ES)
(74) Representative: Elzaburu Marquez, Alberto
(86) International application number: PCT/ES2011/070308
(87) International publication number: WO 2011/157875

(57) **Abstract**

System for providing an enhanced night vision of an object such as the refuelling device (21, 41) used in an aerial refueling operation between a tanker aircraft (11) and a receptor aircraft (13) so that it becomes capable to be observed at night from an observation place such as the receptor aircraft (13), comprising: laser based infrared illumination means (31) for illuminating said object located in the tanker aircraft (11) when said object is said refuelling device (21, 41); one or several portions of said object coated with one or more coatings (51) containing each of them in different concentrations of lanthanide-doped crystals suitable to up convert radiation emitted by a laser infrared light into visible luminescence. The invention also refers to said coating (51) and to methods for producing said coating (51).

## Description

### FIELD OF THE INVENTION

The present invention relates to a system for providing night vision of selected objects and, more in particular, for providing night vision of the refuelling devices used in aerial refuelling operations between a tanker and a receptor aircraft to the pilot of the receptor aircraft.

### BACKGROUND

There are known night vision systems allowing a night vision of the refuelling scenario in aerial refuelling operations between a tanker and a receptor aircraft from the tanker aircraft to satisfy the visibility needs of the tanker operators to perform the refuelling operation.

Such systems use cameras to provide images of the refuelling area, which is conveniently illuminated by making use of suitable illuminating means for night vision, to some monitors placed in the tanker aircraft. One of said illumination means uses IR (Infrared Light) due to the evident advantages that non visible light provides at certain critical situations. To achieve this purpose different types of illuminators have been proposed inside this IR band, from incandescent bulbs filtered with IR pass filters, LED (Light Emitting Diode) based illuminators and recently laser based ones.

It is indeed desirable that the pilot of the receptor aircraft have also a good visibility of the refuelling scenario at night. In this respect there are well known the so-called NVIS ("Night Vision Imaging System") devices and particularly the NVIS goggles. Although the pilot of the receptor aircraft should only wear these goggles when making contact with the tanker aircraft its use certainly involves problems and inconvenients for the pilot.

This invention is intended to the solution of these drawbacks in refuelling operations and other scenarios with similar night vision needs.

### SUMMARY OF THE INVENTION

One object of the present invention is a system allowing a night vision of a selected object from an observation place without the need of any specific night vision means such as for example NVIS goggles.

Another object of the present invention is a system allowing the receptor pilot in aerial refuelling operations between a tanker and a receptor aircraft a night vision of the refueling device without the need of any specific night vision means such as for example NVIS goggles.

Another object of the present invention is a system allowing, on the one hand, to the receptor pilot in aerial refuelling operations between a tanker and a receptor aircraft a night vision of the refueling device without the need of any specific night vision means such as for example NVIS goggles and preventing, on the other hand, the night vision of said refueling device to eventual observers of the refuelling operation in the ground.

In a first aspect, these and other objects are met by a coating for being applied to a portion of the selected object so that it becomes capable to be viewed at night from an observation place, said coating containing lanthanide-doped crystals suitable to up convert radiation emitted by a laser infrared light into visible luminescence, making visible for the naked eye said portion of the selected object when it is illuminated with said laser infrared light.

In a preferred embodiment said coating is compounded by said lanthanide-doped crystals plus a liquid base or a solid base. Hereby it is achieved a coating that can be applied to the selected object as a paint facilitating the coating operation or using aerosol means facilitating a good stability of the coating.

In another preferred embodiment the selected object is the refuelling device used in an aerial refueling operation between a tanker aircraft and a receptor aircraft. Hereby it is achieved a coating for being applied to a device that can be used at night and that shall be desirably viewed by the receptor aircraft pilot without any specific night vision means.

In a second aspect, the above mentioned objects are met by a system for providing an enhanced night vision of an object so that it becomes capable to be observed at night from an observation place, the system comprising:
- Laser based infrared illumination means for illuminating said object.
- One or several portions of said object coated with one or more of said coatings containing different concentrations of lanthanide-doped crystals.

In a preferred embodiment, the nominal wavelength of the light emitted by said illumination means is comprised in the range 750 - 1400 nm. Hereby it is achieved a system allowing the use of a variety of illumination means.

In another preferred embodiment, the nominal wavelength of the light emitted by said illumination means is comprised in the range 770 - 809 nm. Hereby it is achieved a system using suitable illumination means for certain night vision needs.

In preferred embodiments said laser based infrared illumination means can be located in the same or in a different place than said observation place. Hereby there can be achieved suitable systems for different night viewing needs.

In another preferred embodiment said object is the refuelling device used in an aerial refueling operation between a tanker aircraft and a receptor aircraft, said laser based infrared illumination means are located in the tanker aircraft and said observation place is the receptor aircraft. Hereby it is achieved a suitable system for providing a night vision of the refuelling device to the receptor pilot having the possibility of using a plurality of coatings having different properties regarding the intensity and/or the colour of said visible luminescence in different portions of the refuelling device.

In another preferred embodiment, the system also comprises vision means located in the tanker aircraft including at least one camera suitable to be used with said laser based infrared illumination means. Hereby it is achieved a system providing both a night vision of the refuelling device to the operators of the refuelling device in the tanker aircraft and a night vision of the refuelling device to the receptor pilot.

In another preferred embodiment the refuelling device is a boom device having coated with said coating at least the nozzle. Hereby it is achieved a system providing a good night vision of the refuelling device to the receptor pilot.

In another preferred embodiment the refuelling device is a hose/drogue device having coated with said coating at least the drogue or the upper hose sector. Hereby it is achieved a system providing a good night vision of the refuelling device to the receptor pilot.

In a third the above mentioned objects are met by methods for producing said coating.

In a first embodiment the method comprises the following steps: a) dispersion of a determined proportion of lanthanide-doped crystals in a transparent base; b) compounding the result in an acrylic solution. Hereby it is achieved a method for producing said coating as a paint.

In a second embodiment, the method comprises the following steps: a) dispersion of a determined proportion of lanthanide-doped crystals in a solid base; b) compounding the result in an aerosol medium. Hereby it is achieved a method for producing the said coating as an aerosol.

Other features and advantages of the present invention will be understood from the following detailed description in relation with the enclosed drawings.

### BRIEF DESCRIPTION OF DRAWINGS

Figure 1 is a schematic view of a refuelling operation between a tanker aircraft and a receptor aircraft using a boom device.
Figure 2 is a schematic view of a refuelling operation between a tanker aircraft and a receptor aircraft using a hose/drogue device.
Figure 3 is a schematic view of a boom device.
Figure 4 is a schematic view of a boom device with a coating (having an exaggerated thickness for illustration purposes) according to the present invention.
Figure 5 is a schematic view of a hose/drogue device.
Figure 6 is a schematic view of a hose/drogue device with a coating (having an exaggerated thickness for illustration purposes) according to the present invention.
Figure 7 shows the spectral emission of a LIRL device.
Figure 8 shows the emission obtained with a coating according to the present invention.

### DETAILED DESCRIPTION OF PREFERRED EMBODIMENTS

A description of preferred embodiments of a system according to the present invention for providing night vision of the refuelling device in aerial refuelling operations between a tanker and a receptor aircraft follows.

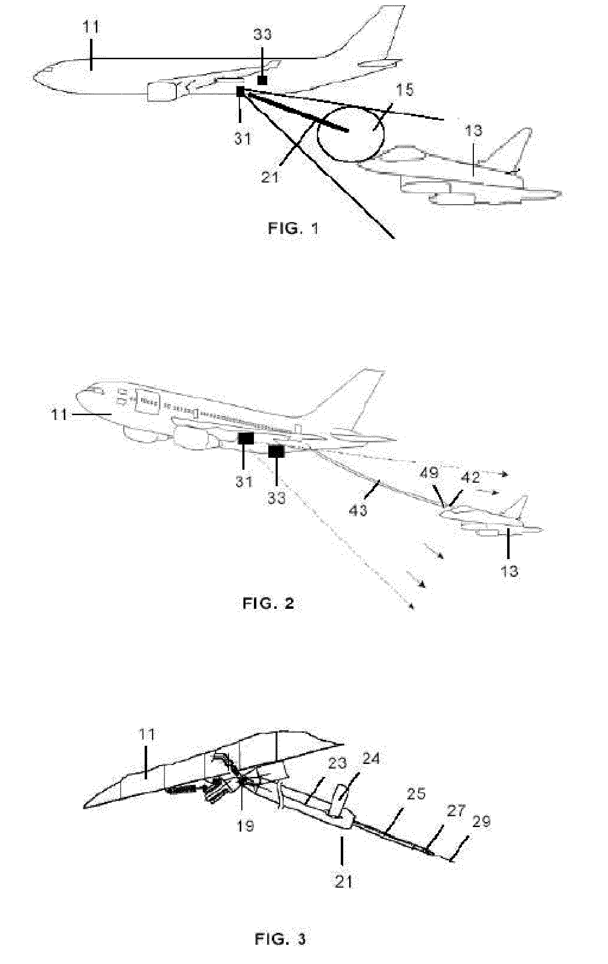

For in-flight refuelling operations, one usual method illustrated in Figures 1 and 3 is based on the use of a boom device 21 for interconnecting a tanker aircraft 11 with a receptor aircraft 13 in flight. From the tanker aircraft 11, the operator controls visually all steps and procedures for a safe refuelling operation manipulating the boom 21 until it makes a physical connection with the receptacle of the approaching receptor aircraft 13 .

A boom device 21 is a telescoping fuel-tight unit attached to the underside fuselage of a tanker aircraft 11 by means of a mechanical articulation 19. Integrally attached to the boom beam 23 are aerodynamic lift surfaces 24 called ruddevators which are used to aerodynamically control the position of the boom 21 in elevation and azimuth. The outer end portion 25 of the boom 21 is a telescoping section for inward and outward movement. Located on the distal end of the telescoping tube 25 there is a boom tip assembly 27 and a nozzle 29. The receptor aircraft 13 is equipped with an aerial refueling receptacle (not shown) which engages with the nozzle 29 for the refueling operation. The boom 21 provides fuel passage from the tanker aircraft 11 to the receptor aircraft 13.

The tanker aircraft 11 operators can supervise the refuelling operation using vision means comprising one or more cameras 33 that provide images of the refuelling scenario 15, illuminated by illuminating means 31, to monitors placed in the tanker aircraft 11 cabin.

Due to a number of technical and economical reasons, sensors used in these cameras 33 have a good sensitivity only at certain regions of the spectrum including the NIR (Near Infrared Region) and so they are suitable to be used with IR illumination, in particular a LIRL (Laser based Infrared Light) illumination at a certain band of the spectrum imposed by the sensor sensitivity of the vision system cameras 31 at the tanker aircraft 11

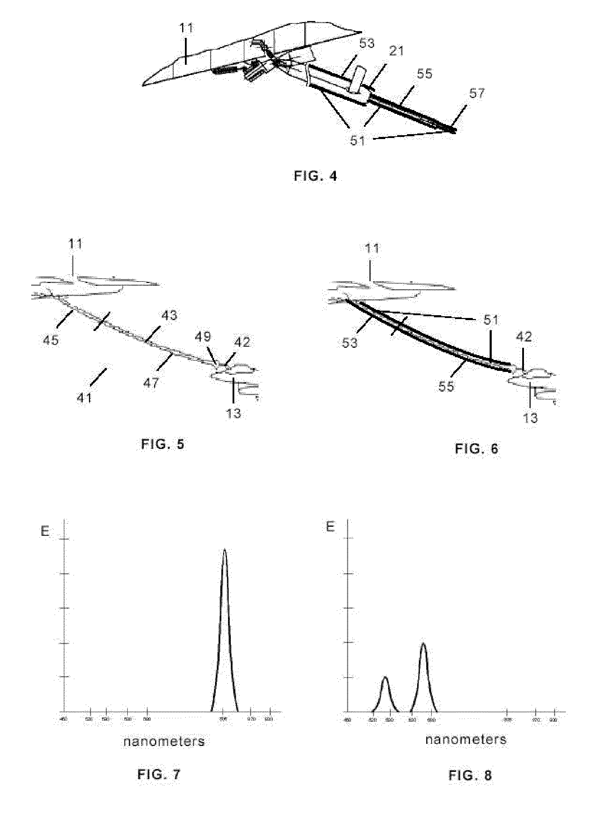

In preferred embodiments it is considered that the nominal wavelength of LIRL illuminating means 31 is comprised in the range 750-1400 nm and, more preferably, in the range 770 - 809 nm. The central wavelength can vary depending on the type of laser used and on it wavelength, but shape is maintained showing temporal coherence of the emitted light as shown in Fig. 7.

The inventor has found that it can be provided visibility of the boom 21 to the pilot of the receptor aircraft 13 by means of a coating 51 of at least a boom portion, the coating containing lanthanide-doped crystals due to their ability to upconvert near-infrared (NIR) radiation into visible luminescence.

The NIR-to-visible upconversion is based on sequential energy transfers between lanthanide dopants or excited-state absorption involving their real metastable-excited states with lifetimes as long as several milliseconds, a process orders of magnitude more efficient than the 2-photon absorption process typically used in multiphoton microscopy. This increased efficiency permits use of a continuous wave laser to generate the upconverted luminescence with exceptional photostability.

Consequently the own LIRL illumination used for the night vision system at the tanker aircraft 11 allows the generation of a visible luminescence in said coating 51 (see Figure 8) that allows the pilot of the receptor aircraft 13 the direct vision of the boom 21, avoiding the need of any night vision device and also avoiding the need to install additional visible lights in order to make visible the boom 21 or the nozzle 29 to the pilot of the receptor aircraft 13.

Using suitable selections of the lanthanide-doped crystals compounds and its concentrations there can be obtained coatings having different properties regarding the intensity and/or the colour of the visible luminescence resulting from the above-mentioned upconversion process to be used in different boom sectors. Then, as illustrated in Fig. 4, different coatings 53, 55, 57 are applied to, respectively, the beam 23, the telescoping tube 25 and the nozzle 29 making use of their properties for a clear delimitation of these elements and for obtaining a better visibility of each of them.

Another usual method for in-flight refuelling operations illustrated in Figures 2 and 5 is called hose and drogue or probe and drogue. This refuelling method employs a flexible hose 43 that trails from the tanker aircraft 11. The drogue 49 is a fitting resembling a windsock or shuttlecock, attached at its narrow end with a valve to the flexible hose 43. The drogue 49 stabilizes the hose 43 in flight and provides a funnel to aid insertion of the receptor aircraft probe 42 into the hose 43. The hose 43 connects to a drum unit and, when not in use, the hose/drogue is reeled completely into the cited drum unit in the tanker aircraft 11. The receptor 13 has a probe 42, which is a rigid arm placed an the aircraft's nose or fuselage. This probe 42 is often retracted when not in use, particularly on high speed aircraft. At the end of the probe 42 is a valve that is closed until it mates with the drogue 49, after which it opens and allows fuel to pass from tanker 11 to receptor 11. Regarding the interaction between hose 43 and probe 42 there can be distinguished in the hose 43 a lower hose sector 47 and an upper hose sector 45 close to the tanker aircraft 11 and less affected than the later by the probe 42.

Similarly to the boom device and as illustrated in Fig. 6 it can be provided visibility of the hose 43 and the drogue 49 to the pilot of the receptor aircraft 13 by means of a coating 51 of at least a portion of the hose 43 and drogue 49, the coating containing lanthanide-doped crystals due to their ability to upconvert near-infrared (NIR) radiation into visible luminescence. It is particularly desirable that the coated portions be the drogue 49 and/or the upper hose sector 45.

Even though the present invention has been developed for satisfying night vision needs in aerial refuelling operations, it shall be noted that the basic idea of this invention is the combination of a coating containing lanthanide-doped crystals in a selected object that shall be visible at night with a LIRL illumination means of said object that generates a visible luminescence in said coating 51, where the illumination means, the object, the interested observer of the object at night can be placed in different locations.

The invention can therefore been used in a variety of applications fields. For example, the coating can be applied to a particular person which shall be identified at night among many other persons in a given scenario. By illuminating the scenario with a laser based Infrared light (a non visible light) said particular person can be made visible at night for an interested observer. The coating can also be applied to moving vehicles for its identification at night in scenarios where it is not allowed (or not desirable) the use of visible light.

The coating 51 can be made using the above-mentioned crystals in an acrylic solution and, thanks to the stability of these crystals in the form of a powder when dispersed in a transparent base, a resulting paint can be obtained to treat the desired surfaces. In general terms, the coating 51 can be made by any procedure that allows the deposition of said crystals to the desired surface and a good adhesion to it, such as a powder high speed deposition and further incrustation over the desired surface.

Although the present invention has been fully described in connection with preferred embodiments, it is evident that modifications may be introduced within the scope thereof, not considering this as limited by these embodiments, but by the contents of the following claims.

## Claims

1. A coating (51) for being applied to a portion of an object so that it becomes capable to be viewed at night from an observation place, said coating (51) containing lanthanide-doped crystals suitable to up convert radiation emitted by a laser infrared light into visible luminescence, making visible for the naked eye said portion of an object when it is illuminated with said laser infrared light.

2. A coating (51) according to claim 1, compounded by said lanthanide-doped crystals plus a liquid base or a solid base.

3. A coating (51) according to any of claims 1-2, wherein said object is the refuelling device (21, 41) used in an aerial refueling operation between a tanker aircraft (11) and a receptor aircraft (13).

4. System for providing an enhanced night vision of an object so that it becomes capable to be observed at night from an observation place, the system comprising:
- laser based infrared illumination means (31) for illuminating said object;
- one or several portions of said object coated with one or more coatings (51) according to any of claims 1-2, containing each of them different concentrations of lanthanide-doped crystals.

5. System according to claim 4, wherein the nominal wavelength of the light emitted by said laser based infrared illumination means (31) is comprised in the range 750 -1400 nm.

6. System according to claim 5, wherein the nominal wavelength of the light emitted by said laser based infrared illumination means (31) is comprised in the range 770 - 809 nm.

7. System according to any of said claims 4-6, wherein said laser based infrared illumination means (31) are located in a different place than said observation place.

8. System according to any of claims 4-6, wherein said laser based infrared illumination means (31) are located in said observation place.

9. System according to any of claims 4-6, wherein:
- said object is the refuelling device (21, 41) used in an aerial refueling operation between a tanker aircraft (11) and a receptor aircraft (13);
- said laser based infrared illumination means (31) are located in the tanker aircraft (11);
- said observation place is the receptor aircraft (13).

10. System according to claim 9, also comprising vision means located ion the tanker aircraft (11) including at least one camera (33) suitable to be used with said laser based infrared illumination means (31);

11. System according to any of claims 9-10, wherein the refuelling device is a boom device (21) comprising a beam (23), a telescopic tube (25) and a nozzle (29).

12. System according to claim 11, wherein at least the nozzle (29) is a coated portion.

13. System according to any of claims 9-10, wherein the refuelling device is a hose and drogue device (41).

14. System according to claim 13, wherein at least the drogue (49) is a coated portion.

15. System according to claim 14, wherein at least the hose upper sector (45) is a coated portion.

16. Method for producing a coating (51) according to claim 2, comprising the following steps:
a) dispersion of a determined proportion of lanthanide-doped crystals in a transparent base;
b) compounding the result in an acrylic solution.

17. Method for producing a coating (51) according to claim 2, comprising the following steps:
a) dispersion of a determined proportion of lanthanide-doped crystals in a solid base;
b) compounding the result in an aerosol medium.
